(19) Europäisches Patentamt

European Patent Office

Office européen des brevets

(11) **EP 3 840 084 A1**

(12) # EUROPEAN PATENT APPLICATION
published in accordance with Art. 153(4) EPC

(43) Date of publication:
**23.06.2021 Bulletin 2021/25**

(21) Application number: **19866897.2**

(22) Date of filing: **24.09.2019**

(51) Int Cl.:
*H01M 2/16* (2006.01)      *H01M 2/18* (2006.01)
*H01M 10/08* (2006.01)      *H01M 10/12* (2006.01)

(86) International application number:
**PCT/JP2019/037309**

(87) International publication number:
**WO 2020/067031 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **26.09.2018 JP 2018180163**

(71) Applicant: **GS Yuasa International Ltd.**
**Kisshoin, Minami-ku,**
**Kyoto-shi, Kyoto 601-8520 (JP)**

(72) Inventors:
• **ANDO, Kazunari**
  **Kosai-shi, Shizuoka 431-0452 (JP)**
• **ITO, Etsuko**
  **Kosai-shi, Shizuoka 431-0452 (JP)**
• **KATO, Hajime**
  **Kosai-shi, Shizuoka 431-0452 (JP)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **LEAD STORAGE BATTERY SEPARATOR AND LEAD STORAGE BATTERY**

(57) Provided are a separator for lead-acid battery, containing a polyolefin and silica and having a Na content of 1000 $\mu$g/cm$^3$ or less, and preferably a Na content of 500 $\mu$g/cm$^3$ or less, and a lead-acid battery using the same.

Fig. 1

EP 3 840 084 A1

**Description**

TECHNICAL FIELD

The present invention relates to a separator for lead-acid battery and a lead-acid battery.

BACKGROUND ART

A lead-acid battery is used in various applications in addition to in-vehicle and industrial applications. A lead-acid battery includes a negative electrode plate, a positive electrode plate, a separator interposed between the negative electrode plate and the positive electrode plate, and an electrolyte solution.

Generally, a separator for lead-acid battery is produced by extrusion-molding a polyolefin resin and inorganic particles (Patent Document 1). In recent years, with the spread of idling stop vehicles, high charge acceptability is required for the lead-acid battery. From the viewpoint of improving the charge acceptability, Patent Document 1 proposes that the amount of sodium eluted from the separator into dilute sulfuric acid having a specific gravity of 1.285 at 20°C when immersed in the dilute sulfuric acid heated to 70°C $\pm$ 2°C for 1 hour is reduced to 3000 $\mu$g or less per 1 g of the separator.

PRIOR ART DOCUMENT

PATENT DOCUMENT

Patent Document 1: International Publication No. 2017-068741 Pamphlet

DISCLOSURE OF THE INVENTION

PROBLEMS TO BE SOLVED BY THE INVENTION

The physical properties of the separator are considered to have a great influence on the probability of occurrence of a penetration short circuit due to lead dendrite. Meanwhile, from a more detailed analysis of a conventional separator, a large amount of sodium has been found to be still contained even after the sodium is sufficiently eluted in the dilute sulfuric acid as proposed in Patent Document 1. From the investigation of the effect of such remaining sodium on the probability of occurrence of the penetration short circuit and the like, a clear correlation has been found.

MEANS FOR SOLVING THE PROBLEMS

The present invention has been achieved based on the above findings, and one aspect thereof relates to a separator for lead-acid battery, which contains a polyolefin and silica and has a Na content of 1000 $\mu$g/cm$^3$ or less.

ADVANTAGES OF THE INVENTION

By using the lead-acid battery separator according to the above aspect of the present invention, the probability of occurrence of a penetration short circuit due to lead dendrite can be reduced.

BRIEF DESCRIPTION OF THE DRAWINGS

Fig. 1 is a schematic plan view of the external appearance of a bag-shaped separator according to an embodiment of the present invention.
Fig. 2 is a perspective view with a part cut away, showing the external appearance and internal structure of a lead-acid battery according to an embodiment of the present invention.
Fig. 3 is a graph showing the Log differential pore volume distribution of a separator according to an embodiment of the present invention.
Fig. 4 is a graph showing the Log differential pore volume distribution of a conventional separator.

MODE FOR CARRYING OUT THE INVENTION

A lead-acid battery separator according to an embodiment of the present invention is a sheet-shaped microporous film containing a polyolefin and silica. The silica is particulate, and dispersed in an acid-resistant polyolefin matrix.

The content of Na contained in the separator is 1000 $\mu$g/cm$^3$ or less. That is, the content of Na per 1 cm$^3$ of the apparent volume of the separator is limited to 1000 $\mu$g or less. The separator usually contains a pore-forming additive. The amount of the pore-forming additive contained in the separator may gradually decrease in the battery, but the apparent volume of the separator hardly changes. Therefore, the effect of a change in the amount of the pore-forming additive in the separator on the content of Na per 1 cm$^3$ of the apparent volume of the separator can be ignored.

Na contained in the separator is considered to be mainly derived from silica. If the content of Na exceeds 1000 $\mu$g/cm$^3$, Na ions are likely to be eluted during overdischarge. Silica tends to be dissolved in neutral to alkaline regions, and is particularly apt to be dissolved in the alkaline region. Above all, silica particles contained in the separator are fine, whereby they may be relatively easily dissolved. If the lead-acid battery is in an overdischarge state, sulfate ions ($SO_4^{2-}$) in the electrolyte solution decrease, so that the pH of the electrolyte solution may reach around 7. This causes silica to start to be dissolved. In the case of a conventional separator, if silica is dissolved, Na ions bonded to silica are eluted. OH ions are produced by the eluted Na ions, so that the pH in the vicinity of the separator locally rises, and becomes alkaline. It is presumed that the alkaline electrolyte solution further promotes the elution of silica from the separator, which causes a gradually deteriorated structure of the separator, so that the probability of occurrence of a penetration short circuit increases.

Meanwhile, when the content of Na in the separator is reduced to 1000 $\mu$g/cm$^3$ or less, a local increase in pH of the electrolyte solution is suppressed even during overdischarge, whereby deterioration in the separator is suppressed. As a result, the probability of occurrence of the penetration short circuit is reduced. Even in a state where the content of Na is reduced to 1000 $\mu$g/cm$^3$ or less, the remaining Na is fixed to a relatively strong silica matrix, so that it is considered that the remaining Na is less likely to be eluted during overdischarge even in a long term. Therefore, it is considered that the probability of occurrence of the penetration short circuit becomes critical between the case where the content of Na is 1000 $\mu$g/cm$^3$ and the case where the content exceeds 1000 $\mu$g/cm$^3$. If the content of Na remaining in the separator is reduced to 500 $\mu$g/cm$^3$ or less, the probability of occurrence of the penetration short circuit is further significantly reduced.

The content of Na contained in the conventional separator before being incorporated into the battery or in the battery before formation is about 3500 $\mu$g/cm$^3$. If the separator is immersed in dilute sulfuric acid having a specific gravity of 1.285 at 20°C and heated to 70°C $\pm$ 2°C for 1 hour, the content of Na is reduced to about 1500 $\mu$g/cm$^3$. The immersion of the separator in dilute sulfuric acid having a specific gravity of 1.285 at 20°C and heated to 70°C $\pm$ 2°C for 1 hour, and the formation condition of the lead-acid battery generally correspond to each other, whereby the content of Na of the separator contained in the conventional formed lead-acid battery is considered to be about 1500 $\mu$g/cm$^3$.

It is considered that the Na ions eluted during formation are mainly derived from a penetrant (surfactant) that imparts penetration property to the separator. The Na ions derived from the penetrant are easily eluted into the dilute sulfuric acid when the separator comes into contact with the heated dilute sulfuric acid. Meanwhile, the Na ions derived from silica are apt to remain in the separator because they form, for example, a Si-O-Na bond. The amount of Na ions derived from silica and remaining in the separator after formation is about half that before formation.

The Na ions eluted from the separator into the electrolyte solution during formation do not significantly affect the probability of occurrence of the penetration short circuit. During formation, the pH of the electrolyte solution does not reach around 7, which does not cause the dissolution of silica. Even if the OH ions are produced by the Na ions eluted from the separator, they are immediately neutralized by sulfuric acid in the electrolyte solution, whereby the pH in the vicinity of the separator does not locally rise. Originally, from the viewpoint of securing charge acceptability, and the like, the composition of the electrolyte solution is designed by adding a Na salt to the electrolyte solution so that the electrolyte solution after formation contains Na ions at a constant concentration. In the design of the composition of the electrolyte solution, an increase in the concentration of Na ions eluted from each component including the separator during formation has also been already considered. The distribution of the Na ions in the electrolyte solution is usually uniform. It is considered that the uniformly distributed Na ions do not cause the pH in the vicinity of the separator to locally rise.

The content of Na in the separator is highly dependent on a silica producing process. The silica used for the separator is usually produced by a wet method. The silica produced by the wet method has a large specific surface area and contains many OH groups on its surface, whereby it is suitable as a separator material. In the wet method, silica is often grown in a high-temperature alkaline solution. Shifting the pH of the solution to an acidic region stops the growth of silica particles. If particle growth is stopped at a higher alkaline pH, the surface of the silica may have a rich -Si-ONa or -Si-O-Si- structure. Meanwhile, if the growth is stopped at a lower acidic pH, the surface of the silica may have a rich -Si-OH structure. That is, by controlling the pH of the solution, silica having a small amount of a -Si-ONa structure and a large amount of a -Si-OH structure can be obtained.

By reducing the content of Na in the separator to 1000 $\mu$g/cm$^3$ or less, the internal resistance of the lead-acid battery is also reduced. As a result, a cold cranking current (CCA) is improved. The CCA is one of indexes exhibiting the performance of the lead-acid battery. For example, in the case of a lead-acid battery having a rated voltage of 12 V, it is a discharge current set such that a voltage after 30 seconds is 7.2 V when the lead-acid battery is discharged at a temperature of -18°C $\pm$ 1°C. The mechanism by which the internal resistance of the lead-acid battery is reduced is not clear, but if the content of Na is reduced to 1000 $\mu$g/cm$^3$ or less, a peak peculiar to a region of 0.03 pm or less (for example, around 0.02 pm) is observed in the Log differential pore volume distribution of the separator. As a result, the total pore volume is increased by about 10% as compared with a conventional separator having no such peak. Such a change in the pore volume distribution is inferred to be related to reduction in the resistance component of the separator.

The separator is, for example, folded in half, and formed in a bag shape. The separator has a main part facing an electrode plate and welded parts provided on both sides of the main part so as to intersect a crease. The welded parts that face each other by folding in half are welded to each other. The main part may have a base part and a plurality of ribs provided on at least one surface of the base part (at least one of the inner surface and the outer surface of the bag). From the viewpoint of suppressing a penetration short circuit and securing a sufficient CCA, the thickness of the base part is, for example, 0.15 mm or more and 0.25 mm or less, and may be 0.15 mm or more and 0.20 mm or less. By setting the thickness of the base part to 0.25 mm or less, an increase in the resistance component of the separator can be suppressed while the effect of suppressing the penetration short circuit is sufficiently secured, whereby a sufficient CCA is likely to be secured. By setting the thickness of the base part to 0.15 mm or more, a sufficient effect of suppressing the occurrence of the penetration short circuit is likely to be obtained while the resistance component of the separator is sufficiently reduced.

Next, a lead-acid battery according to an embodiment of the present invention includes a positive electrode plate, a negative electrode plate, a separator interposed between the positive electrode plate and the negative electrode plate, and an electrolyte solution. That is, the separator contains a polyolefin and silica, and the content of Na contained in the separator is 1000 $\mu$g/cm$^3$ or less.

The Al ions may be contained at a concentration of 0.02 mol/L or more and 0.2 mol/L or less in the electrolyte solution. As a result, the effect of suppressing the penetration short circuit is further improved. If the Al ions are added to the electrolyte solution, water molecules are coordinated with the Al ions, whereby an effect of changing the pH of the electrolyte solution from a weakly acidic region to a slightly acidic region acts. Therefore, even in an overdischarge state where sulfate ions in the electrolyte solution are almost eliminated, a local increase in the pH in the vicinity of the separator is likely to be suppressed. Such an effect of the Al ions becomes apparent when the content of Na contained in the separator is reduced to 1000 $\mu$g/cm$^3$ or less. If the content of Na in the separator exceeds 1000 $\mu$g/cm$^3$, the amount of Na ions eluted and the amount of OH ions produced by the dissolution of silica increase, so that the effect of the Al ions cannot keep up, which eventually makes it difficult to suppress the local increase in the pH in the vicinity of the separator.

The lead-acid battery is sometimes used in a poor charged state referred to as a partial state of charge (PSOC). For example, in an idling stop (IS) vehicle, the lead-acid battery is used in PSOC. In the IS vehicle, the concentration of sulfuric acid in the electrolyte solution during discharge is significantly reduced, so that the penetration short circuit is apt to occur. In the separator or the lead-acid battery according to the above aspect, the content of Na of the separator is reduced, whereby the penetration short circuit can be effectively suppressed even when the separator or the lead-acid battery is used for an IS power supply in which the penetration short circuit is apt to occur.

Hereinafter, specific example of the separator for lead-acid battery according to an embodiment of the present invention will be described with reference to the drawings. However, the present invention is not limited to the following embodiment.

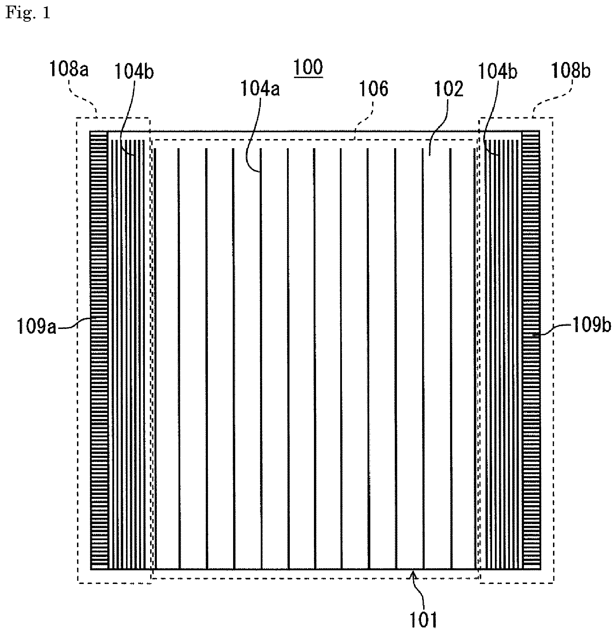

Fig. 1 is a schematic plan view showing the external appearance of a bag-shaped separator 100 according to an embodiment of the present invention. The bag-shaped separator 100 has a shape in which a sheet-shaped microporous film having an area twice that of a bag is folded in half at a crease 101. That is, the sheet-shaped microporous film is divided into a first portion and a second portion facing each other by the crease 101.

Each of the first portion and the second portion includes a main part 106 facing an electrode plate, and end parts 108a and 108b provided on both sides of the main part 106 and the crease 101. Most of the main part 106 and the end parts 108a and 108b are composed of a base part 102. A plurality of main ribs 104a are provided on the outer surface of the base part 102 of the main part 106, and a plurality of mini ribs 104b having a protrusion height smaller than that of the main ribs 104a are provided on the outer surface of the base part 102 of the end parts 108a and 108b.

The main ribs 104a and the mini ribs 104b have an effect of improving the diffusivity of the electrolyte solution in the vicinity of the electrode plate, for example.

Neither the main ribs 104a nor the mini ribs 104b are indispensable. At least one of the main ribs 104a and the mini ribs 104b may be provided on the inner surface of the base part 102 (bag), or may be provided on both the inner surface and the outer surface.

The end parts 108a and 108b of each of the first portion and the second portion respectively include welded parts 109a and 109b. In the welded parts 109a and 109b, the first portion and the second portion facing each other are joined by welding.

The thickness of the base part 101 is, for example, 0.15 mm or more and 0.25 mm or less, or 0.15 mm or more and 0.20 mm or less. The thickness of the base part is obtained by measuring and averaging the thicknesses of the base part at five optionally selected points in the cross-sectional photograph of the separator.

The height of the main rib 104a may be, for example, 0.4 mm or more and 0.8 mm or less. The height of the mini rib 104b may be, for example, 0.05 mm or more and 0.3 mm or less. The height of each rib is obtained by averaging the heights of the ribs from the base part measured at 10 optionally selected points on one main surface of the base part.

The thickness of the base part and the height of each rib is obtained for a separator taken out from a fully charged formed lead-acid battery, cleaned, and vacuum-dried (dried under a pressure lower than an atmospheric pressure).

The embodiment shown in Fig. 1 is only one aspect of the present invention. For example, a non-bag-shaped sheet-shaped separator may be sandwiched between the negative electrode plate and the positive electrode plate.

The separator is obtained, for example, by extrusion-molding a resin composition containing a polyolefin, silica particles, a pore-forming additive, and a penetrant (surfactant) into a sheet, and then partially removing the pore-forming additive. By removing the pore-forming additive, micropores are formed in a polyolefin matrix.

In general, the pore volume of the separator changes depending on the amount of the remaining pore-forming additive. If the amount of the pore-forming additive remaining in the separator is small, the number of pores in the separator is large, so that the resistance of the separator is low, but the durability of the separator at a high temperature deteriorates. Meanwhile, if a large amount of pore-forming additive remains in the separator, the number of pores in the separator is small, so that the resistance of the separator increases, but the durability of the separator at a high temperature is improved. Therefore, when the pore-forming additive is partially removed, it is important to control the amount of the pore-forming additive removed.

As the polyolefin, polyethylene and polypropylene and the like are preferable, and polyethylene is more preferable. As the pore-forming additive, a solid pore-forming additive such as a polymer powder and/or a liquid pore-forming additive such as an oil (a mineral oil and a synthetic oil and the like) can be used. The amount of the silica particles in the separator is, for example, 120 parts by mass or more and 200 parts by mass or less per 100 parts by mass of the polyolefin. The amount of the pore-forming additive in the separator cannot be completely determined because it changes with time, but it is, for example, 30 parts by mass or more and 60 parts by mass or less per 100 parts by mass of the polyolefin.

The ribs may be formed in a sheet during extrusion molding, or may be formed by pressing a sheet with a roller having grooves corresponding to the ribs after the sheet is formed or after the pore-forming additive is removed.

(Electrolyte Solution)

The electrolyte solution is an aqueous solution containing sulfuric acid and may contain Al ions. The electrolyte solution may be gelled as necessary. The electrolyte solution may contain Na ions or may contain other additives.

The concentration of the Al ions in the electrolyte solution is, for example, 0.02 mol/L or more and 0.2 mol/L or less. By setting the concentration of the Al ions to 0.02 mol/L or more, an effect of suppressing a penetration short circuit is significantly increased. By setting the concentration of the Al ions to 0.2 mol/L or less, high charge acceptability after overdischarge can be secured.

The Al ions can be contained in the electrolyte solution, for example, by dissolving an aluminum compound in the electrolyte solution. The aluminum compound may be any compound that is soluble in an aqueous sulfuric acid solution, and for example, an aluminum salt of an inorganic acid is used, and aluminum sulfate is particularly preferable.

The specific gravity of the electrolyte solution at 20°C in the fully charged formed lead-acid battery is, for example, 1.10 g/cm$^3$ or more and 1.35 g/cm$^3$ or less.

(Positive Electrode Plate)

Examples of the positive electrode plate of the lead-acid battery include pasted type and clad type positive electrode plates.

The pasted type positive electrode plate includes a positive electrode current collector and a positive electrode material. The positive electrode material is held by the positive electrode current collector. In the pasted type positive electrode plate, the positive electrode material is obtained by removing the positive electrode current collector from the positive electrode plate. The positive current collector may be formed in the same manner as in the negative current collector, and can be formed by casting lead or a lead alloy or processing a lead or lead alloy sheet.

The clad type positive electrode plate includes a plurality of porous tubes, a spine inserted into each of the tubes, a positive electrode material filled in each of the tubes into which the spine is inserted, and a joint for connecting the plurality of tubes. In the clad type positive electrode plate, the positive electrode material is obtained by removing the tube, the spine, and the joint from the positive electrode plate.

The lead alloy used for the positive electrode current collector is preferably a Pb-Ca-based alloy and a Pb-Ca-Sn-based alloy in terms of corrosion resistance and mechanical strength. The positive electrode current collector may have lead alloy layers having different compositions, and a plurality of alloy layers may be provided. A Pb-Ca-based alloy or a Pb-Sb-based alloy is preferably used for the spine.

The positive electrode material contains a positive active material (lead dioxide or lead sulfate) that develops a capacity in an oxidation-reduction reaction. The positive electrode material may contain other additives as necessary.

The unformed pasted type positive electrode plate is obtained by filling a positive current collector with a positive electrode paste, followed by curing and drying in the same manner as in the negative electrode plate. Thereafter, the unformed positive electrode plate is formed. The positive electrode paste is prepared by mixing a lead powder, additives, water, and sulfuric acid.

The clad type positive electrode plate is formed by filling each of a plurality of tubes into which a spine is inserted with a lead powder or a slurry lead powder, and causing a joint to connect the tubes.

(Negative Electrode Plate)

The negative electrode plate of the lead-acid battery is composed of a negative electrode current collector and a negative electrode material. The negative electrode material is obtained by removing the negative electrode current collector from the negative electrode plate. The negative electrode current collector may be formed by casting lead (Pb) or a lead alloy, or may be formed by processing a lead or lead alloy sheet. Examples of the processing method include expanding processing and punching processing. If a negative electrode grid is used as the negative electrode current collector, the negative electrode material is likely to be supported, which is preferable.

The lead alloy used for the negative electrode current collector may be any of a Pb-Sb-based alloy, a Pb-Ca-based alloy, and a Pb-Ca-Sn-based alloy. The lead or the lead alloy may further contain at least one selected from the group consisting of Ba, Ag, Al, Bi, As, Se, and Cu and the like as an additive element.

The negative electrode material contains a negative electrode active material (lead or lead sulfate) having a capacity developed in an oxidation-reduction reaction. The negative electrode material may contain an expander, a carbonaceous material such as carbon black, and barium sulfate and the like, and may contain other additives as necessary.

The negative active material in a charged state is spongy lead, but an unformed negative electrode plate is usually produced using a lead powder.

The negative electrode plate can be formed by filling a negative electrode current collector with a negative electrode paste, followed by curing and drying to produce an unformed negative electrode plate, and thereafter forming the unformed negative electrode plate. The negative electrode paste is produced by adding water and sulfuric acid to a lead powder, an organic expander, and as necessary, various additives, followed by mixing. The unformed negative electrode plate is preferably cured at a temperature higher than room temperature and a high humidity in a curing step.

The negative electrode plate can be formed by charging an element including an unformed negative electrode plate in a state where the element is immersed in an electrolyte solution containing sulfuric acid in the container of the lead-acid battery. However, the formation may be performed before the assembly of the lead-acid battery or the element. Spongy lead is produced by the formation.

(Fiber Mat)

The lead-acid battery may further include a fiber mat interposed between the positive electrode plate and the negative electrode plate. The fiber mat contains a sheet-like fiber aggregate unlike the separator. As such a fiber aggregate, a sheet in which fibers insoluble in an electrolyte solution are entangled is used. Examples of the sheet include a non-woven fabric, a woven fabric, and a knitted fabric. For example, 60% by mass or more of the fiber mat is formed of fibers.

As the fiber, a glass fiber, a polymer fiber, and a pulp fiber and the like can be used. Among the polymer fiber, a polyolefin fiber is preferable.

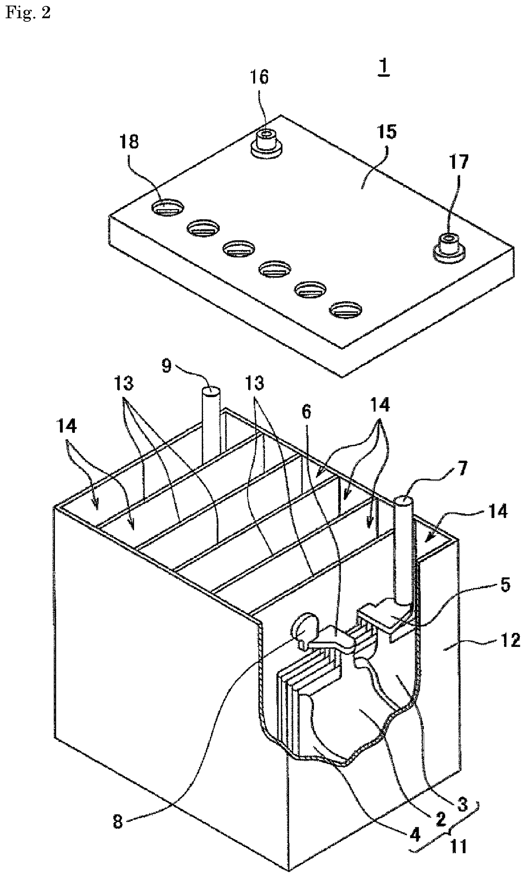

Fig. 2 shows the external appearance of an example of a lead-acid battery according to an embodiment of the present invention.

A lead-acid battery 1 includes a container 12 that accommodates elements 11 and an electrolyte solution (not shown). The container 12 is partitioned into a plurality of cell chambers 14 by a partition 13. One element 11 is accommodated in each cell chamber 14. An opening part of the container 12 is closed with a lid 15 including a negative electrode terminal 16 and a positive electrode terminal 17. The lid 15 includes a vent plug 18 provided in each cell chamber. At the time of water addition, the vent plug 18 is removed to replenish a water addition solution. The vent plug 18 may have a function for discharging a gas generated in the cell chamber 14 to the outside of the battery.

The element 11 is configured by laminating a plurality of negative electrode plates 2 and a plurality of positive electrode plates 3 with a separator 4 interposed therebetween. Here, the bag-like separator 4 that accommodates the negative electrode plate 2 is shown, but the form of the separator is not particularly limited. In the cell chamber 14 positioned on one end part of the container 12, a negative electrode shelf part 6 that connects the plurality of negative electrode plates 2 in parallel is connected to a through-connector 8, and a positive electrode shelf part 5 that connects the plurality of positive electrode plates 3 in parallel is connected to a positive pole 7. The positive pole 7 is connected to the positive electrode terminal 17 disposed outside the lid 15. In the cell chamber 14 positioned on the other end part of the container 12, a negative pole 9 is connected to the negative electrode shelf part 6, and the through-connector 8 is connected to the positive electrode shelf part 5. The negative pole 9 is connected to the negative electrode terminal 16 disposed outside the lid 15. Each through-connector 8 passes through a through-hole provided in the partition 13, and connects the elements 11 of the cell chambers 14 adjacent to each other in series.

Hereinafter, each analysis method will be described.

Herein, the fully charged state of the lead-acid battery is set by the definition of JIS D 5301: 2006. More specifically, the fully charged state is a state where the lead-acid battery is charged at a current of 1/20 of a numerical value described in a rated capacity until a terminal voltage during charge measured every 15 minutes or a temperature-converted electrolyte solution density has a constant value three successive times. The lead-acid battery is charged in a state where the electrolyte solution of the lead-acid battery is filled to a specified liquid level.

The fully charged lead-acid battery is a fully charged formed lead-acid battery. The lead-acid battery may be fully charged immediately after formation or after a lapse of time from forming (for example, after formation, a lead-acid battery during use (preferably at the initial stage of use) may be fully charged). The battery in the initial stage of use refers to a battery that has not been used for a long time and has hardly deteriorated.

(1) Analysis of Separator

(i) Collection of Sample

First, a fully charged formed lead-acid battery is disassembled to collect a separator. Next, the collected separator is immersed in pure water for 1 hour to remove sulfuric acid in the separator. Then, the separator is allowed to stand for 16 hours or more in a 25°C environment for drying. The dried separator is cut into a predetermined size to prepare a measurement sample.

(ii) Content of Na in Separator

The content of Na in the separator is obtained by analysis according to inductively coupled plasma emission spectroscopy (ICP-AES). Specifically, first, a measurement sample of about 15 cm² is placed in a platinum crucible, and heated with a bunsen burner until no white smoke is emitted. Next, in an electric furnace (in an oxygen flow, 550°C), the sample is heated for about 1 hour for ashing. To the sample after ashing, 5 mL of a 30% nitric acid solution is added, and 2 mL of a 50% hydrofluoric acid solution is further added, followed by stirring, to completely dissolve the ash in the acid. Next, ion-exchanged water is added to the acid solution of the ash to adjust the volume, and the concentration of Na is then measured with an ICP emission spectrometer. As a measuring apparatus, for example, iCAP7400 manufactured by Thermo Fisher Scientific Co., Ltd. can be used. The mass of the measurement sample and the amount of the acid to be used and the like may be appropriately changed depending on the content of Na contained in the separator.

(iii) Log Differential Pore Volume Distribution of Separator

The pore distribution of a separator (measurement sample) cut into a strip (20 mm x 5 mm) is measured by a mercury intrusion method. As a measuring apparatus, for example, Autopore IV9510 manufactured by Shimadzu Corporation can be used.

(2) Concentration of Al Ions in Electrolyte Solution

The concentration of the Al ions in the electrolyte solution is obtained by subjecting the electrolyte solution taken out from the fully charged formed lead-acid battery to ICP-AES analysis. Specifically, the electrolyte solution is weighed and collected from the fully charged formed lead-acid battery, and ion-exchanged water is added for diluting. The concentration of the Al ions is obtained by an ICP emission spectrometer.

(3)CCA

A lead-acid battery having a rated voltage of 12 V is prepared for measurement according to JIS D 5301: 2006. Specifically, a battery rested for 1 to 5 hours after charge is completed is placed in a cooling chamber at - 18°C ± 1°C for at least 25 hours or until an electrolyte solution temperature of any cell in the center reaches -18°C ± 1°C for cooling. Within 2 minutes after cooling is completed, the battery is discharged at a predetermined "rated cold cranking current (Icc)" for 30 seconds. A discharge current is maintained constant within the range of Icc ± 0.5% during discharge. A terminal voltage (V1) after 30 seconds from the start of discharge is confirmed to be 7.2 V to 8.0 V At this time, a cold cranking current (CCA) is obtained by the following formula (see Japan Storage Battery Industry Association Standard: SBA1003-1991).

$$CCA = (11.5 - 7.2)/(11.5 - V1) \times Icc$$

(4) Penetration Short Circuit Resistance

A cycle (about 1 month) of charging and discharging a lead-acid battery having a rated voltage of 12 V in a constant temperature water tank at 25°C in the procedure shown in the following steps 1 to 4 is repeated.

Next, the open circuit voltage (OCV) of the lead-acid battery is measured. If a penetration short circuit does not occur, the open circuit voltage (OCV) returns to the start of the test, but if the penetration short circuit occurs, the open circuit voltage drops, whereby the occurrence of the penetration short circuit can be confirmed. The penetration short circuit resistance is evaluated by comparing the numbers of cycles until the open circuit voltage falls below 11 V.

Step 1: The lead-acid battery is subjected to constant current discharge at 0.05 CA (a current of 1/20 of a value described in a rated capacity) until the voltage reaches 1.0 V/cell. The CA is a current of a numerical value described in a rated capacity. For example, in the case of a battery having a rated capacity of 30 Ah, 1 CA is 30 A, and 1 mCA is 30 mA.

Step 2: A 10 Ω resistor is connected between battery terminals, and the lead-acid battery is left for 28 days.

Step 3: The lead-acid battery is subjected to constant voltage charge at a maximum current of 50 A and a charge voltage of 2.4V/cell for 10 minutes.

Step 4: The lead-acid battery is subjected to constant current charge at 0.05 CA for 27 hours.

EXAMPLES

Hereinafter, the present invention will be specifically described based on Examples and Comparative Examples, but the present invention is not limited to the following Examples.

<<Lead-Acid Batteries A1 to A24 and B1 to B5>>

(1) Production of Negative Electrode Plate

Lead oxide, carbon black, barium sulfate, lignin, a reinforcing material (synthetic resin fiber), water, and sulfuric acid were mixed to prepare a negative electrode paste. The negative electrode paste was filled in a mesh part of an expanded grid made of an antimony-free Pb-Ca-Sn-based alloy, cured, and dried to obtain an unformed negative electrode plate having a width of 100 mm, a height of 110 mm, and a thickness of 1.3 m. The amounts of carbon black, barium sulfate, lignin, and synthetic resin fiber were respectively adjusted to 0.3% by mass, 2.1% by mass, 0.1% by mass, and 0.1% by mass when measured in the fully charged state of the formed negative electrode plate.

(2) Production of Positive Electrode Plate

Lead oxide, a synthetic resin fiber as a reinforcing material, water, and sulfuric acid were mixed to prepare a positive electrode paste. The positive electrode paste was filled in a mesh part of an expanded grid made of an antimony-free Pb-Ca-Sn-based alloy, cured, and dried to obtain an unformed positive electrode plate having a width of 100 mm, a height of 110 mm, and a thickness of 1.6 mm.

(3) Separator

A resin composition containing 100 parts by mass of polyethylene, 160 parts by mass of silica particles having a controlled Na content, 80 parts by mass of a pore-forming additive (paraffin-based oil), and a trace amount of a penetrant is extrusion-molded into a sheet. The pore-forming additive was partially removed to prepare microporous

8

films having various base thicknesses (denoted as "T" in the following Table 1) and various Na contents. Next, the sheet-shaped microporous film was folded in half to form a bag, and a welded part was formed in each of end parts to obtain bag-shaped separators A1 to A24 and B1 to B5 as shown in Fig. 1.

The pore-forming additive was removed until the amount of the pore-forming additive per 100 parts by mass of the polyethylene was approximately 50 parts by mass. The composition of the resin composition containing polyethylene, silica, a pore-forming additive, and a penetrant can be optionally changed depending on the design and production conditions of the separator, and the usage of the lead-acid battery, and the like.

On the outer surface of the bag-shaped separator, a plurality of stripe-shaped main ribs and mini ribs having protrusion heights of 0.5 to 0.65 mm and 0.18 mm were provided. A pitch of the main ribs was set to 9.8 mm, and a pitch of the mini ribs was set to 1 mm. The height of the main ribs was fixed so that the total thickness of the separator was set to 0.8 mm. The thickness of a base part of the separator, and the protruding height of the ribs, and the like are values obtained for the separator before the production of the lead-acid battery, but these are almost the same as values measured in the procedure described above for the separator taken out from the produced lead-acid battery.

(4) Production of Lead-Acid Battery

Each of the unformed negative electrode plates was housed in a bag-shaped separator, and an element was formed by seven unformed negative electrode plates and six unformed positive electrode plates per cell. Ears of the positive electrode plates and ears of the negative electrode plates were respectively welded to a positive electrode shelf part and a negative electrode shelf part by a cast-on strap (COS) method. The element was inserted into a polypropylene container, and an electrolyte solution was injected into the polypropylene container. Formation was performed in the container, and flooded-type lead-acid batteries A1 to A24 and B1 to B5 having a rated voltage of 12 V and a rated capacity of 30 Ah (capacity when discharged at a current of 1/5 of the numerical value described in the rated capacity) were assembled. In the container, six elements are connected in series.

The specific gravity of the electrolyte solution after formation at 20°C was 1.285, and aluminum sulfate was dissolved at a predetermined concentration in the electrolyte solution as necessary.

[Evaluation 1: Log Differential Pore Volume Distribution]

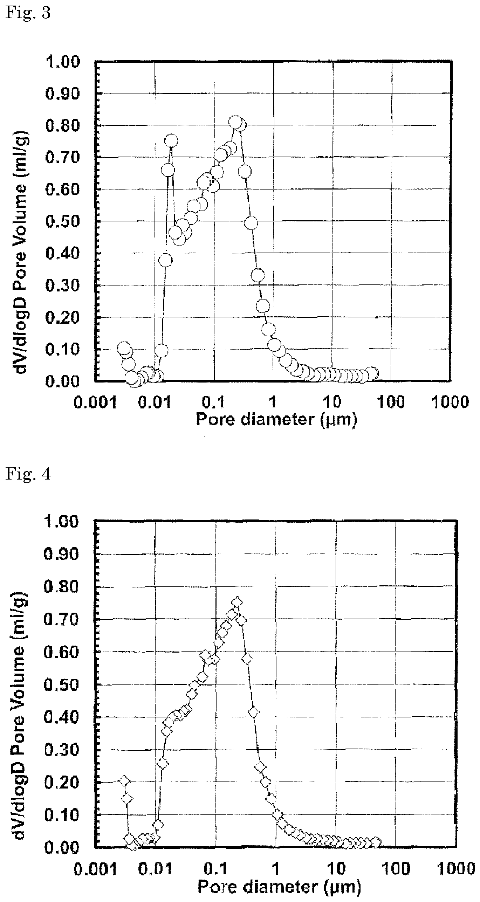

The Log differential pore volume distribution of the separator of the battery A9 of Example 9 was obtained in the procedure described above. The results (relationship between Log differential pore volume (dV/dlogD) and pore diameter are shown in Fig. 3. The Log differential pore volume distribution of the separator of the battery B3 of Comparative Example 3 was obtained. The results are shown in Fig. 4.

[Evaluation 2: Penetration Short Circuit Resistance]

In the procedure described above, the number of cycles until a penetration short circuit occurred was obtained for each of A1 to A24 and B1 to B5, and the battery B3 of Comparative Example 3 was indexed with a reference value as 100.

[Evaluation 3: CCA]

In the procedure described above, CCA was obtained for each of A1 to A24 and B1 to B5, and the battery B3 of Comparative Example 3 was indexed with a reference value as 100.

The results of the evaluations 2 and 3 are shown in Table 1. The indexes in Table 1 are indexes when the battery B3 of Comparative Example 3 is set to 100.

[Table 1]

| Separator | T | Content of Na | Concentration of Al ion | Penetration short circuit resistance | | CCA |
|---|---|---|---|---|---|---|
| Battery | (mm) | ($\mu$ g/cm$^3$) | (mol/L) | Cycle | Index | Index |
| B1 (comparative) | 0.15 | 1500 | 0 | 6 | 75 | 102.0 |
| B2 (comparative) | 0.15 | 1500 | 0.2 | 7 | 88 | 102.2 |
| A1 | 0.15 | 1000 | 0 | 9 | 113 | 102.5 |
| A2 | 0.15 | 1000 | 0.2 | 11 | 138 | 102.7 |

(continued)

| Separator | T | Content of Na | Concentration of Al ion | Penetration short circuit resistance | | CCA |
|---|---|---|---|---|---|---|
| Battery | (mm) | ($\mu$ g/cm$^3$) | (mol/L) | Cycle | Index | Index |
| A3 | 0.15 | 500 | 0.2 | 11 | 138 | 103.7 |
| A4 | 0.15 | 250 | 0.2 | 11 | 138 | 104.1 |
| A5 | 0.15 | 50 | 0.2 | 13 | 163 | 104.5 |
| B3 (comparative) | 0.20 | 1500 | 0 | 8 | 100 | 100.0 |
| B4 (comparative) | 0.20 | 1500 | 0.02 | 9 | 113 | 100.4 |
| B5 (comparative) | 0.20 | 1500 | 0.2 | 9 | 113 | 100.2 |
| A6 | 0.20 | 1000 | 0 | 12 | 150 | 100.9 |
| A7 | 0.20 | 1000 | 0.02 | 14 | 175 | 101.2 |
| A8 | 0.20 | 1000 | 0.2 | 15 | 188 | 101.5 |
| A9 | 0.20 | 500 | 0.02 | 17 | 213 | 101.7 |
| A10 | 0.20 | 500 | 0.2 | 19 | 238 | 101.9 |
| A11 | 0.20 | 250 | 0.02 | 18 | 225 | 102.2 |
| A12 | 0.20 | 250 | 0.2 | 20 | 250 | 102.9 |
| A13 | 0.20 | 50 | 0.02 | 19 | 238 | 103.3 |
| A14 | 0.20 | 50 | 0.2 | 21 | 263 | 103.5 |
| A15 | 0.25 | 1000 | 0 | 14 | 175 | 100.0 |
| A16 | 0.25 | 1000 | 0.2 | 16 | 200 | 100.4 |
| A17 | 0.25 | 500 | 0.2 | 17 | 213 | 101.3 |
| A18 | 0.25 | 250 | 0.2 | 20 | 250 | 102.1 |
| A19 | 0.25 | 50 | 0.2 | 22 | 275 | 102.5 |
| A20 | 0.30 | 1000 | 0 | 16 | 200 | 98. 6 |
| A21 | 0.30 | 1000 | 0.2 | 17 | 213 | 98.8 |
| A22 | 0.30 | 500 | 0.2 | 19 | 238 | 99.0 |
| A23 | 0.30 | 250 | 0.2 | 21 | 263 | 99.2 |
| A24 | 0.30 | 50 | 0.2 | 23 | 288 | 99.3 |

In comparison of B1 and B2 of Comparative Examples 1 and 2 with A1 to A5 of Examples 1 and 5, the content of Na is set to 1000 $\mu$g/cm$^3$ or less even when the thickness of the base part of the separator is as very thin as 0.15 mm. Therefore, the penetration short circuit resistance is found to be significantly improved. CCA is very excellent in A1 to A5. Meanwhile, B3 to B5 of Comparative Examples 3 to 5 have a Na content of 1500 $\mu$g/cm$^3$ although the thickness of the base part is 0.2 mm, so that B3 to B5 have insufficient penetration short circuit resistance. An increase in the thickness of the base part further improves the penetration short circuit resistance, but if the thickness of the base part reaches 0.3 mm, the CCA tends to slightly decrease. Therefore, the thickness of the base part is preferably less than 0.3 mm. The addition of the Al ions to the electrolyte solution is found to further improve the penetration short circuit resistance.

INDUSTRIAL APPLICABILITY

The separator for lead-acid battery according to the present invention can be applied to valve regulated and flooded-type lead-acid batteries. For example, the separator for lead-acid battery can be suitably utilized as a power source for starting vehicles (an automobile and a motorcycle and the like) and a power source for an industrial power storage apparatus such as an electric vehicle (a forklift and the like). The separator is also suitable for IS lead-acid batteries that are charged and discharged under PSOC conditions.

DESCRIPTION OF REFERENCE SIGNS

1: lead-acid battery
2: negative electrode plate
3: positive electrode plate
4: separator
5: positive electrode shelf part
6: negative electrode shelf part
7: positive pole
8: through-connector
9: negative pole
11: element
12: container
13: partition
14: cell chamber
15: lid
16: negative electrode terminal
17: positive electrode terminal
18: vent plug
100: separator
101: crease
102: base part
104a: main rib
104b: mini rib
106: main part
108a, 108b: end part
109a, 109b: welded part

**Claims**

1. A separator for lead-acid battery comprising a polyolefin and silica and having a Na content of 1000 $\mu$g/cm$^3$ or less.

2. The separator for lead-acid battery according to claim 1, wherein the Na content is 500 $\mu$g/cm$^3$ or less.

3. The separator for lead-acid battery according to claim 1 or 2, wherein a thickness of a base part of a main part facing an electrode plate is 0.15 mm or more and 0.25 mm or less.

4. A lead-acid battery comprising:

   a positive electrode plate;
   a negative electrode plate;
   a separator interposed between the positive electrode plate and the negative electrode plate; and
   an electrolyte solution,
   wherein the separator contains a polyolefin and silica and has a Na content of 1000 $\mu$g/cm$^3$ or less.

5. The lead-acid battery according to claim 4, wherein the electrolyte solution contains Al ions at a concentration of 0.02 mol/L or more and 0.2 mol/L or less.

Fig. 1

Fig. 2

Fig. 3

Fig. 4

<table>
<tr><td colspan="2" align="center">**INTERNATIONAL SEARCH REPORT**</td><td>International application No.<br>PCT/JP2019/037309</td></tr>
</table>

**A. CLASSIFICATION OF SUBJECT MATTER**
Int.Cl. H01M2/16(2006.01)i, H01M2/18(2006.01)i, H01M10/08(2006.01)i,
        H01M10/12(2006.01)i

According to International Patent Classification (IPC) or to both national classification and IPC

**B. FIELDS SEARCHED**

Minimum documentation searched (classification system followed by classification symbols)
Int.Cl. H01M2/16, H01M2/18, H01M10/08, H01M10/12

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2017/068741 A1 (GS YUASA INTERNATIONAL LTD.) 27 April 2017, paragraphs [0013]-[0017], [0020]-[0022], examples 6-8 (Family: none) | 1, 2, 4<br>3, 5 |
| Y | JP 2017-045539 A (HITACHI CHEMICAL CO., LTD.) 02 March 2017, claims 1-3, paragraphs [0014]-[0015] (Family: none) | 3, 5 |
| A | JP 2017-033660 A (GS YUASA INTERNATIONAL LTD.) 09 February 2017 (Family: none) | 1-5 |

☒ Further documents are listed in the continuation of Box C.   ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>22 November 2019 (22.11.2019) | Date of mailing of the international search report<br>03 December 2019 (03.12.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2019/037309

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2017-033662 A (GS YUASA INTERNATIONAL LTD.) 09 February 2017 (Family: none) | 1-5 |
| A | JP 2015-032481 A (GS YUASA INTERNATIONAL LTD.) 16 February 2015 (Family: none) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017068741 A